# EUROPÄISCHE PATENTANMELDUNG

(11) **EP 2 485 160 A1**
(43) Veröffentlichungstag der Anmeldung: **08.08.2012**
(21) Anmeldenummer: 11153702.3
(22) Anmeldetag: 08.02.2011
(51) Int. Cl.: G06F 17/30

(54) **Verfahren zur Auswahl einer Informationsmenge**

(71) Anmelder: Rewoo Technologies AG, 61440 Oberursel (DE)
(72) Erfinder: Schnell, Matthias, 76137 Karlsruhe (DE)
(74) Vertreter: Katscher Habermann Patentanwälte

(57) **Zusammenfassung**

Die Erfindung betrifft ein Verfahren zur Auswahl einer Informationsmenge aus in mindestens einer Datenbank (9) elektronisch gespeicherten Informationen, wobei in der Informationsmenge enthaltene Informationen alle Kriterien einer Kriteriumsmenge erfüllen, so dass durch Auswahl der Kriteriumsmenge die Informationsmenge bestimmt werden kann. Auf einem elektronischen Anzeigegerät werden in einer ersten Ansicht eine Auswahlskalenanzeige (1) mit ersten Auswahldaten (4) eines ersten Informationstyps angezeigt, wobei die Kriteriumsmenge mit Hilfe eines ersten Auswahlelements (2) auf der Auswahlskalenanzeige (1) ausgewählt werden kann. Zudem wird eine Subskalenanzeige (3) mit ersten Steuerdaten (5) eines zweiten Informationstyps angezeigt, wobei ein Steuerdatenelement mit Hilfe eines zweiten Auswahlelements auf der Subskalenanzeige (3) ausgewählt werden kann. Bei Auswahl des Steuerdatenelements wird die Auswahlskalenanzeige (1) automatisch beeinflusst. Das erste Auswahlelement (2) und das zweite Auswahlelement werden mit Hilfe mindestens eines elektronischen Eingabegeräts aktiviert und gesteuert. Bei Auswahl des Steuerdatenelements wird automatisch eine zweite Ansicht anstelle der ersten Ansicht auf dem elektronischen Anzeigegerät angezeigt. Auf der Auswahlskalenanzeige (1) werden dann erste Auswahldaten (4) des zweiten Informationstyps angezeigt und auf der Subskalenanzeige (3) werden erste Steuerdaten (5) eines dritten Informationstyps angezeigt.

## Beschreibung

Die Erfindung betrifft ein Verfahren zur Auswahl einer Informationsmenge aus in mindestens einer Datenbank elektronisch gespeicherten Informationen, wobei in der Informationsmenge enthaltene Informationen alle Kriterien einer Kriteriumsmenge erfüllen, so dass durch Auswahl der Kriteriumsmenge die Informationsmenge bestimmt werden kann, wobei auf einem elektronischen Anzeigegerät in einer ersten Ansicht eine Auswahlskalenanzeige mit ersten Auswahldaten eines ersten Informationstyps angezeigt wird, wobei die Kriteriumsmenge mit Hilfe eines ersten Auswahlelements auf der Auswahlskalenanzeige ausgewählt werden kann, wobei eine Subskalenanzeige mit ersten Steuerdaten eines zweiten Informationstyps angezeigt werden, wobei ein Steuerdatenelement mit Hilfe eines zweiten Auswahlelements auf der Subskalenanzeige ausgewählt werden kann, wobei bei Auswahl des Steuerdatenelements die Auswahlskalenanzeige automatisch beeinflusst wird und wobei das erste Auswahlelement und das zweite Auswahlelement mit Hilfe mindestens eines elektronischen Eingabegeräts aktiviert und gesteuert werden können.

Die Erfindung betrifft ferner ein Computerprogrammprodukt zur Benutzung in einem Datennetz und/oder auf einer Datenverarbeitungseinheit, wobei das
Computerprogrammprodukt ein oder mehrere computerlesbare Medien umfasst, die computerausführbare Anweisungen auf sich gespeichert haben.

Solche Verfahren zur Auswahl einer Informationsmenge werden üblicherweise auf elektronischen Datenverarbeitungsgeräten wie z.B. Personalcomputern, Mobiltelefonen oder digital-elektronischen Multifunktionsdatenverarbeitungsgeräten mit beispielsweise berührungsempfindlichen Bildschirmen eingesetzt. Auf diesen Geräten bzw. auf datenübertragend mit diesen Geräten verbundenen digital-elektronischen Datenverarbeitungsgeräten können unterschiedlichste Informationen in Datensätzen einer oder mehrerer Datenbanken elektronisch gespeichert werden. Dabei können die Datensätze zum Beispiel in Dateien eines Dateisystems abgelegt werden und von einem Datenbankverwaltungssystem verwaltet werden. Es ist aber auch möglich, dass die Dateien des Dateisystems die Datensätze darstellen, die von einem Dateiverwaltungssystem verwaltet werden. Dabei ermöglicht das Datenbankverwaltungssystem bzw. das Dateiverwaltungssystem unter anderem den Zugriff auf die gespeicherten Datensätze und die Bereitstellung bestimmter Informationen.

Um auf eine bestimmte Informationsmenge der in der Datenbank bzw. den Datenbanken elektronisch gespeicherten Informationen zuzugreifen, wird üblicherweise eine Kriteriumsmenge beispielsweise in Form einer Suchanfrage definiert. Eine solche Suchanfrage könnte beispielsweise lauten: "Wähle alle Datensätze aus Datenbank 1 aus, die nach dem 01.01.2010 angelegt wurden". Auf Grundlage einer solchen Suchanfrage wird anschließend das elektronische Datenverarbeitungssystem bzw. das auf dem elektronischen Datenverarbeitungssystem ausgeführte Datenverwaltungssystem oder das Dateiverwaltungssystem dazu veranlasst, alle Informationen aus der elektronisch gespeicherten Datenbank auszuwählen, die das Kriterium "Angelegt nach dem 01.01.2010" erfüllen.

Um solche Datenbanksuchanfragen an das elektronische Datenverarbeitungssystem übergeben zu können und es zu veranlassen, die entsprechende Suchanfrage durchzuführen, werden üblicherweise vorgegebene Suchfragen verwendet, mit Hilfe derer die gesuchten Informationen nach einem oder mehreren Kriterien aus der Datenbank abgefragt werden. Beispielsweise ist es bekannt, auf einem mit dem elektronischen Datenverarbeitungsgerät datenübertragend verbundenen elektronischen Anzeigeräts Eingabefelder für verschiedene Kriterien einer oder verschiedener Suchfragen anzuzeigen. In diese Eingabefelder kann ein Benutzer mit Hilfe eines elektronischen, mit dem Datenverarbeitungsgerät datenleitend verbundenen Eingabegeräts eine bestimmte Ausprägung eines Suchkriteriums bzw. bestimmte Ausprägungen mehrerer Kriterien eingeben, mit dem bzw. mit denen anschließend eine vorformulierte Suchanfrage an die elektronisch gespeicherte Datenbank gestellt wird. Beispielsweise könnte ein Eingabefeld vorgesehen sein, in das ein Datum eingetragen werden kann. Die vorformulierte Suchanfrage könnte lauten: "Wähle alle Datensätze aus der Datenbank aus, die nach dem in dem Eingabefeld eingegebenen Datum angelegt wurden". Bei dem Kriterium handelt es sich also um das Datum und ein bestimmtes Datum wie zum Beispiel der "01.01.2010" stellt eine Ausprägung des Kriteriums "Datum" dar.

Um die Eingabe des oder der Kriterien für die Durchführung einer vorformulierten Suchanfrage durch ein elektronisches Datenverarbeitungsgerät möglichst einfach und intuitiv zu gestalten werden unter anderem Auswahlskalen eingesetzt, die auf dem elektronischen Anzeigegerät angezeigt werden und mit Hilfe des elektronischen Eingabegerätes steuerbar und aktivierbar sind.

Auf solchen Auswahlskalen werden Ausprägungen der Kriterien dargestellt, mit denen die vorformulierte Suchanfrage an das elektronische Datenverarbeitungsgerät gestellt werden können. Eine Ausprägung oder mehrere Ausprägungen eines Kriteriums kann bzw. können dabei beispielsweise mit Hilfe einer Computermaus auf dem elektronischen Anzeigegerät ausgewählt werden. Die ausgewählte Ausprägung bzw. die gegebenenfalls mehreren ausgewählten Ausprägungen bilden eine Kriteriumsmenge.

Die auf einer Auswahlskala angezeigten Auswahldaten beziehen sich immer auf eine Eigenschaft bzw. ein Kriterium mit dem eine vorformulierte Suchanfrage an das elektronische Datenverarbeitungsgerät gestellt werden kann. Beispielsweise kann es sich bei diesem Kriterium um den Maßstab einer auf dem elektronischen Anzeigegerät darzustellenden Landkarte handeln. Auf der Auswahlskalenanzeige können dann beispielsweise verschiedene auswählbare Maßstäbe geordnet von kleinen Maßstäben bis hin zu großen Maßstäben angezeigt werden. Sobald ein Benutzer mit Hilfe eines auf dem elektronischen Anzeigegerät angezeigten und mit Hilfe des elektronischen Eingabegeräts steuerbaren und aktivierbaren ersten Auswahlelements einen Maßstab auf der Auswahlskalenanzeige ausgewählt hat, ruft das elektronische Datenverarbeitungsgerät automatisch die zu diesem Maßstab zugeordneten Landkarteninformationen aus der elektronisch gespeicherten Datenbank ab und stellt diese anschließend automatisch auf dem elektronischen Anzeigegerät dar.

Weitere denkbare Kriterien, deren mögliche und auswählbare Ausprägungen auf Auswahlskalenanzeigen dargestellt werden können, sind beispielsweise Zeitpunkte oder Zeiträume, Längen, Gewichtsangaben oder aber auch Eigenschaften wie Berufe von Personen oder Projekte eines Unternehmens.

Im Sinne der Erfindung wird eine Darstellung nicht als eine Skala oder Auswahlskala angesehen, wenn Ausprägungen von Eigenschaften bzw. Kriterien unterschiedlicher Hierarchieebenen durch separate Auswahlelemente alternativ ausgewählt oder jeweils separat ausgewählt und kombiniert werden können. Ein Beispiel für eine Darstellung, die nicht als Auswahlskala angesehen wird, sind beispielsweise nebeneinander auf dem elektronischen Anzeigegerät dargestellte Auswahlbedienelemente zur Auswahl einer Kalenderanzeige in entweder Tagen oder aber Wochen, Monaten bzw. Jahren.

Zur weiteren Vereinfachung der Vorgabe einer Kriteriumsmenge werden teilweise auch weitere Skalen, die im Rahmen dieser Erfindung als Subskalenanzeigen bezeichnet werden, gleichzeitig mit der Auswahlskalenanzeige auf dem elektronischen Anzeigegerät dargestellt. Auf diesen Subskalenanzeigen können Steuerdatenelemente mit Hilfe eines zweiten, durch ein elektronisches Eingabegerät steuerbaren und aktivierbaren Auswahlelements, ausgewählt werden.

Beispielsweise könnte es sich bei einem Kriterium um einen Monat oder mehrere Monate eines beliebigen Jahres handeln. Dann könnten auf der Auswahlskalenanzeige die Monate von Januar bis Dezember angezeigt werden und auf der Subskalenanzeige verschiedene Jahre zur Auswahl angeboten werden. Durch Aktivierung eines bestimmten Jahres auf der Subskalenanzeige mit Hilfe des steuerbaren zweiten Auswahlelements kann so das Jahr ausgewählt werden, auf das sich die mit Hilfe des ersten Auswahlelements auf der Auswahlskalenanzeige ausgewählten Monate beziehen.

Die beschriebenen Auswahlverfahren können nur dann sinnvoll eingesetzt werden, wenn nur eins bzw. nur wenige Kriterien für eine bzw. mehrere vorgegebene Suchanfragen angezeigt werden sollen. Soweit verschiedene Kriterien für die Suchanfrage vorgegeben werden können sollen, müssen entsprechend viele Auswahlskalenanzeigen bzw. Subskalenanzeigen auf dem elektronischen Anzeigegerät angezeigt werden. Dadurch werden die verschiedenen Auswahlmöglichkeiten für einen Benutzer schnell unübersichtlich und eine intuitive Bedienung der Auswahlskalenanzeigen und Subskalenanzeigen sowie eine intuitive Auswahl der Informationsmenge aus den elektronisch gespeicherten Informationen ist nicht mehr möglich.

Zudem wird die Darstellung auf den Skalen schnell unübersichtlich, wenn eine Vielzahl von Ausprägungen eines Kriteriums ausgewählt werden können sollen.

Aufgabe der Erfindung ist es daher, ein Verfahren zur Auswahl einer Informationsmenge aus in mindestens einer Datenbank elektronisch gespeicherten Informationen bereitzustellen, bei denen eine Auswahl der Informationen nach verschiedenen Kriterien mit Hilfe einer Auswahlskalenanzeige und Subskalenanzeigen von einem Benutzer vorgenommen werden kann, wobei die Bedienung der Auswahlskalenanzeige und der Subskalenzeigen möglichst intuitiv und einfach sein soll.

Diese Aufgabe wird erfindungsgemäß dadurch gelöst, dass bei einer Auswahl des Steuerdatenelements automatisch eine zweite Ansicht anstelle der ersten Ansicht auf dem elektronischen Anzeigegerät angezeigt wird, wobei auf der Auswahlskalenanzeige erste Auswahldaten des zweiten Informationstyps angezeigt werden und auf der Subskalenzeige erste Steuerdaten eines dritten Informationstyps angezeigt werden. Bei dem ersten Informationstyp kann es sich beispielsweise um Jahresquartale handeln. In der ersten Ansicht werden auf der Auswahlskalenanzeige also verschiedene Quartale eines Jahres mit Hilfe des ersten Auswahlelements auswählbar angezeigt. Bei dem zweiten Informationstyp kann es sich um die zu den auf der Auswahlskalenzeige angezeigten Jahresquartalen gehörenden Monate handeln. In der ersten Ansicht werden auf der Subskalenzeige folglich diese Monate dargestellt. Mit Hilfe des durch das elektronische Eingabegerät steuerbaren ersten Auswahlelements kann ein Quartal bzw. können mehrere Quartale zur Vorgabe einer Kriteriumsmenge ausgewählt werden.

Wird hingegen ein auf der Subskalenanzeige dargestellter Monat mit Hilfe des steuerbaren zweiten Auswahlelements ausgewählt, so werden automatisch in einer zweiten Ansicht verschiedene auswählbare Monate auf der Auswahlskalenanzeige dargestellt. Durch die Auswahl eines Monats bzw. Steuerelements auf der Subskalenanzeige in der ersten Ansicht wird also zunächst das Kriterium verändert oder die auswählbaren Ausprägungen des Kriteriums eingeschränkt, nach dem bzw. denen Informationen aus der elektronisch gespeicherten Datenbank abgefragt werden können.

Durch Auswahl der daraufhin automatisch in der zweiten Ansicht dargestellten Monate auf der Auswahlskalenanzeige kann dann das Kriterium "Monat" festgelegt werden. Die Steuerdaten in der ersten Ansicht werden also automatisch zu Auswahldaten in der zweiten Ansicht.

Die auf der Subskalenanzeige in der zweiten Ansicht angezeigten Steuerdaten sind von einem dritten Informationstyp. Dabei kann es sich in diesem Beispiel um Kalenderwochen handeln, die zu den auf der Auswahlskalenanzeige der zweiten Ansicht dargestellten Monaten zugeordnet werden können.

Auf diese Weise kann beispielsweise die Auswahl eines beliebigen Zeitraums ausgehend von Jahrhunderten bis hin zu wenigen Minuten einfach und intuitiv mit Hilfe einer einzigen Auswahlskalenanzeige und einer einzigen Subskalenanzeige durchgeführt werden.

Auf die gleiche Art und Weise könnten beispielsweise auch Informationen über Projekte nach verschiedenen Kriterien wie etwa Zeitraum, inhaltlicher Bezug oder beteiligte Personen oder aber mehrere Personen nach den Kriterien Alter, Beruf und Einkommen ausgewählt werden.

Um eine Beziehung zwischen den Steuerdaten und den Auswahldaten einfach wahrnehmbar und intuitiv bedienbar auf dem elektronischen Anzeigegerät darstellen zu können, ist erfindungsgemäß weiter vorgesehen, dass die Subskalenanzeige unmittelbar benachbart und mit vergleichbaren Abmessungen zu der Auswahlskalenanzeige auf dem elektronischen Anzeigegerät angezeigt wird. Auf diese Weise ist es beispielsweise möglich, die Beziehung von auf einer Subskalenanzeige dargestellten Kalenderwochen zu auf der Auswahlskalenanzeige angezeigten Monaten grafisch dadurch zu veranschaulichen, dass die jeweiligen zu einem Monat gehörenden Kalenderwochen unmittelbar neben, unter oder oberhalb des jeweiligen Monats auf dem elektronischen Anzeigegerät dargestellt werden.

Zu diesem Zweck ist vorteilhafter Weise vorgesehen, dass eine Auswahlskaleneinteilung automatisch gemäß einer vorgegebenen, informationstypabhängigen Skaleneinteilungsregel gewählt wird und eine Subskaleneinteilung automatisch gemäß einer vorgegebenen Beziehung zwischen dem Informationstyp der ersten Auswahldaten und dem Informationstyp der ersten Steuerdaten gewählt wird.

Die einzelnen Steuerdatenelemente bzw. Auswahldatenelemente können mit Hilfe von auf der Subskalenanzeige und der Auswahlskalenanzeige dargestellter Teilstriche grafisch voneinander getrennt werden. Der Abstand der einzelnen auf der Auswahlskalenanzeige angezeigten Teilstriche und damit die Anzahl der dargestellten Ausprägungen des Kriteriums werden mit Hilfe einer vorgegebenen, informationstypabhängigen Skaleneinteilungsregel automatisch von dem elektronischen Datenverarbeitungsgerät bestimmt.

Wird zum Beispiel eine Subskalenanzeige mit Kalenderwochen unterhalb einer Auswahlskalenanzeige mit Monaten dargestellt, so kann die Zugehörigkeit der verschiedenen Kalenderwochen zu den einzelnen Monaten besonders anschaulich dadurch auf dem elektronischen Anzeigegerät visualisiert werden, dass ein Abstand der einen Monat kennzeichnenden Teilstriche jeweils dem Abstand der beiden Teilstriche auf der Subskalenanzeige entspricht, die die zu dem Monat gehörenden vier Kalenderwochen begrenzen und ein erster Teilstrich der ersten Kalenderwoche eines Monats in unmittelbarer Nähe zu einem ersten Teilstrich des Monats dargestellt wird und ein letzter Teilstrich der vierten Kalenderwoche des Monats in unmittelbarer Nähe zu einem zweiten Teilstrich des Monats darstellt wird.

Um die Auswahldaten möglichst einfach mit Hilfe des ersten Anzeigeelements auf der Auswahlskalenanzeige aktivieren zu können ist erfindungsgemäß vorgesehen, dass das erste Auswahlelement an der Auswahlskalenanzeige auf dem elektronischen Anzeigegerät angezeigt wird, wobei das erste Auswahlelement mit Hilfe des mindestens einen Eingabegeräts an der Auswahlskalenanzeige verschoben werden kann und die von dem ersten Auswahlelement umfasste auf der Auswahlskalenanzeige dargestellte Kriteriumsmenge ausgewählt wird. Das erste Auswahlelement kann also einfach beispielsweise wie ein Schieber über die Auswahlskalenanzeige hinweg bewegt werden, so dass sich das erste Auswahlelement ständig über der Auswahlskalenanzeige befindet. Auf diese Weise ist die Auswahl der Kriteriumsmenge besonders einfach und intuitiv durchführbar.

Um die auswählbare Kriteriumsmenge möglichst flexibel an die jeweiligen Anforderungen anpassen zu können ist vorteilhafterweise vorgesehen, dass eine Breite des ersten Auswahlelements angepasst werden kann, so dass eine linke Grenze und eine rechte Grenze der Kriteriumsmenge angepasst wird, die mit dem ersten Auswahlelement ausgewählt werden kann. Die Größe des ersten Auswahlelements kann beispielsweise mit Hilfe einer Computermaus durch Ziehen der entsprechenden Seitenkanten des ersten Auswahlelements einfach durchgeführt werden. Auf diese Weise können z. B. einfach mehrere Monate oder nur ein Monat auf einer Auswahlskalenanzeige ausgewählt werden.

Um das in einer ersten Ansicht ausgewählte
Steuerdatenelement auf der Auswahlskalenanzeige in der zweiten Ansicht für einen Benutzer einfach auffindbar darzustellen, ist vorteilhafterweise vorgesehen, dass bei Auswahl eines Steuerdatenelements das Steuerdatenelement als ein Auswahldatenelement automatisch an einer vorgegebenen Position auf der Auswahlskalenanzeige in der zweiten Ansicht dargestellt wird. Da das in der ersten Ansicht ausgewählte Steuerdatenelement immer an der gleichen bzw. einer ähnlichen Position auf der Auswahlskalenanzeige in der zweiten Ansicht dargestellt wird, ist es für einen Benutzer sehr einfach möglich, das in der ersten Ansicht ausgewählte Steuerdatenelement auf der Auswahlskalenanzeige in der zweiten Ansicht aufzufinden.

Das Auffinden des in der ersten Ansicht ausgewählten Steuerdatenelements in der Auswahlskalenanzeige der zweiten Ansicht sowie der weitere Auswahlvorgang kann dadurch weiter vereinfacht werden, dass das über das Steuerdatenelement ausgewählte Auswahldatenelement in einem mittleren Bereich der Auswahlskalenanzeige dargestellt wird. Dadurch dass das in der ersten Ansicht ausgewählte Steuerdatenelement in der zweiten Ansicht zentriert auf der Auswahlskalenanzeige dargestellt wird, wird auch eine erleichterte Verschiebung oder Vergrößerung des ersten Auswahlelements in beide Auswahlskalenanzeigerichtungen ermöglicht.

Die Wahrnehmung der Steuerdaten und Auswahldaten wird dadurch weiter vereinfacht, dass in einem vorangehenden Verfahrensschritt für jeden Informationstyp eine Ordnungsregel vorgegeben werden kann, gemäß der die Daten des jeweiligen Informationstyps automatisch geordnet und auf der Auswahlskalenanzeige oder der Subskalenanzeige angezeigt werden. Auf diese Weise kann sichergestellt werden, dass die Steuerdaten und die Auswahldaten gemäß einer intuitiven Logik geordnet auf den Skalen dargestellt werden.

Häufig weisen die Kriterien eine Vielzahl von Ausprägungen auf, so dass nur ein Teil der denkbaren und möglichen Ausprägungen auf den Skalen auf dem elektronischen Anzeigegerät dargestellt werden können, um die Wahrnehmung und intuitive Bedienbarkeit der Skalen nicht zu beeinträchtigen. Um aber auch die in einer Ansicht nicht dargestellten Ausprägungen eines Kriteriums auswählen zu können, ist erfindungsgemäß vorgesehen, das zweite Auswahldaten des ersten Informationstyps anstelle der ersten Auswahldaten auf der Auswahlskalenanzeige dargestellt werden und zweite Steuerdaten des zweiten Informationstyps anstelle der ersten Steuerdaten auf der Subskalanzeige dargestellt werden oder das zweite Auswahldaten des zweiten Informationstyps anstelle der ersten Auswahldaten auf der Auswahlskalenanzeige dargestellt werden und zweite Steuerdaten des dritten Informationstyps anstelle der ersten Steuerdaten auf der Subskalenanzeige dargestellt werden, wobei sich die ersten Auswahldaten und die zweiten Auswahldaten in mindestens einem Auswahldatenelement unterscheiden und die zweiten Steuerdaten nach einer vorgegebenen Beziehungsregel zwischen dem jeweiligen Informationstyp der Auswahldaten und dem jeweiligen Informationstyp der Steuerdaten automatisch ausgewählt werden.

Auf diese Weise ist es möglich, durch die verschiedenen Ausprägungen des Kriteriums beispielsweise durch Bedienen eines entsprechenden auf dem elektronischen Anzeigegerät dargestellten Bedienelements zu scrollen. Gleichzeitig wird dadurch sichergestellt, dass bei diesem Scrollen durch die auf der Auswahlskalenanzeige dargestellten Ausprägungen eines Kriteriums auf der Subskalenanzeige die zu den jeweils auf der Auswahlskalenanzeige dargestellten Auswahldaten zugehörigen Steuerdaten dargestellt werden.

Um die auf der Auswahlskalenanzeige anzuzeigenden Auswahldaten eines Informationstyps einfach auswählen zu können, ist vorteilhafterweise vorgesehen, das die zweiten Auswahldaten mit Hilfe mindestens eines ersten auf dem Anzeigegerät angezeigten Bedienungselements ausgewählt werden. Beispielsweise können auf zwei entgegengesetzten Seiten der Auswahlskalenanzeige jeweils ein Bedienungselement angezeigt werden. Bei Betätigung eines der Bedienungselemente wird durch die auf der Auswahlskalenanzeige dargestellten Teilwertebereiche der Ausprägungen des Kriteriums in die durch die Position des betätigten Bedienungselements gekennzeichnete Richtung gescrollt. Bei Betätigung des anderen Betätigungselements wird durch den dargestellten Teilwertebereich in eine entsprechende andere Richtung gescrollt.

Um die Auswahl der Informationsmenge möglichst flexibel anpassen zu können und eine möglichst schnelle Auswahl der Kriteriumsmenge zu ermöglichen, ist erfindungsgemäß vorgesehen, dass weitere Subskalenanzeigen mit weiteren Steuerdaten jeweils verschiedener Informationstypen unmittelbar benachbart zu der Auswahlskalenanzeige auf dem elektronischen Anzeigegerät angezeigt werden. Beispielsweise könnten auf der Auswahlskalenanzeige Quartale angezeigt werden, auf einer ersten Subskalenanzeige zu den Quartalen zugehörige Monate und auf einer zweiten Subskalenanzeige zu den Quartalen zugehörige Jahre angezeigt werden.

Um die Wahrnehmung mehrerer Subskalenanzeigen zu vereinfachen und die Beziehungen der auf den verschiedenen Subskalenanzeigen dargestellten Steuerdatenelemente zu den jeweiligen auf der Auswahlskalenanzeige dargestellten Auswahldaten grafisch anschaulich zu visualisieren, ist vorteilhafterweise vorgesehen, dass eine erste Subskalenanzeige unmittelbar benachbart zu oder auf einer ersten Seite der Auswahlskalenanzeige angezeigt wird und eine zweite Subskalenanzeige auf einer der ersten Seite gegenüberliegenden zweiten Seite unmittelbar benachbart zu der Auswahlskalenanzeige angezeigt wird.

Die Auswahl einer Kriteriumsmenge auf einer Auswahlskalenanzeige mit jeweils einer auf
gegenüberliegenden Seiten der Auswahlskalenzeige dargestellten Subskalenanzeigen wird erfindungsgemäß dadurch vereinfacht, dass in der bei Auswahl eines Steuerdatenelements der ersten Subskalenanzeige automatisch angezeigten zweiten Ansicht auf der Auswahlskalenanzeige erste Auswahldaten des Informationstyps des ausgewählten Steuerdatenelements angezeigt werden, wobei auf der zweiten Subskalenanzeige erste Steuerdaten des Informationstyps der in der ersten Ansicht dargestellten Auswahldaten angezeigt werden und in der ersten Subskalenanzeige Steuerdaten eines weiteren Informationstyps angezeigt werden. Wenn beispielsweise auf der Auswahlskalenanzeige Quartale dargestellt werden, und auf einer ersten Subskalenanzeige zu den Quartalen zugehörige Monate und auf einer zweiten Subskalenanzeige zu den Quartalen zugehörige Jahre dargestellt werden, so werden bei Auswahl eines Monats auf der ersten Subskalenanzeige in der zweiten Ansicht auf der Auswahlskalenanzeige die Monate dargestellt werden. Auf der zweiten Subskalenanzeige in der zweiten Ansicht werden die zu diesen Monaten gehörigen Quartale angezeigt, die in der ersten Ansicht auf der Auswahlskalenanzeige angezeigt wurden. Auf der ersten Subskalenanzeige der zweiten Ansicht werden beispielsweise zu den Monaten gehörende Kalenderwochen angezeigt.

Ein gesondertes oder zusammen mit geeigneter Hardware handelsfähiges Computerprogrammprodukt ist
vorteilhafterweise so ausgestaltet, dass die durch einen Prozessor ausgeführten Anweisungen das Datennetz und/oder die Datenverarbeitungseinheit dazu veranlassen, dass erfindungsgemäße Verfahren auszuführen.

Weitere Einzelheiten der Erfindung werden in der Zeichnung anhand exemplarischer Ausführungsbeispiele näher erläutert.

Es zeigt:
Fig. 1 eine schematische Darstellung der Auswahl einer Informationsmenge aus einer Tabelle mit Hilfe einer Auswahlskalenanzeige und einer Subskalenanzeige,
Fig. 2a, 2b und 2c schematische Darstellungen verschiedener Ansichten einer Auswahlskalenanzeige und einer Subskalenanzeige bei Auswahl verschiedener Steuerdatenelemente,
Fig. 3a eine schematische Darstellung einer Auswahlskalenanzeige mit ersten Auswahldaten und einer Subskalenanzeige mit ersten Steuerdaten,
Fig. 3b die in Fig. 3a dargestellte Auswahlskalenanzeige mit zweiten Auswahldaten und die in Fig. 3a dargestellte Subskalenanzeige mit zweiten Steuerdaten,
Fig. 4a und 4b die in Fig. 3a und 3b dargestellten Scrollvorgang, wobei die Position des ersten Auswahlelements bei dem Scrollvorgang automatisch verändert wird,
Fig. 5a und 5b eine schematische Darstellung der Veränderung einer Größe des ersten Auswahlelements und
Fig. 6 eine schematische Darstellung einer Auswahlskalenanzeige mit zwei gegenüberliegend angeordneten Subskalenanzeigen.

Der Übersichtlichkeit halber ist in den Figuren jeweils nur eine Auswahl aus einer Vielzahl gleichbezeichneter Elemente mit Bezugszeichen versehen.

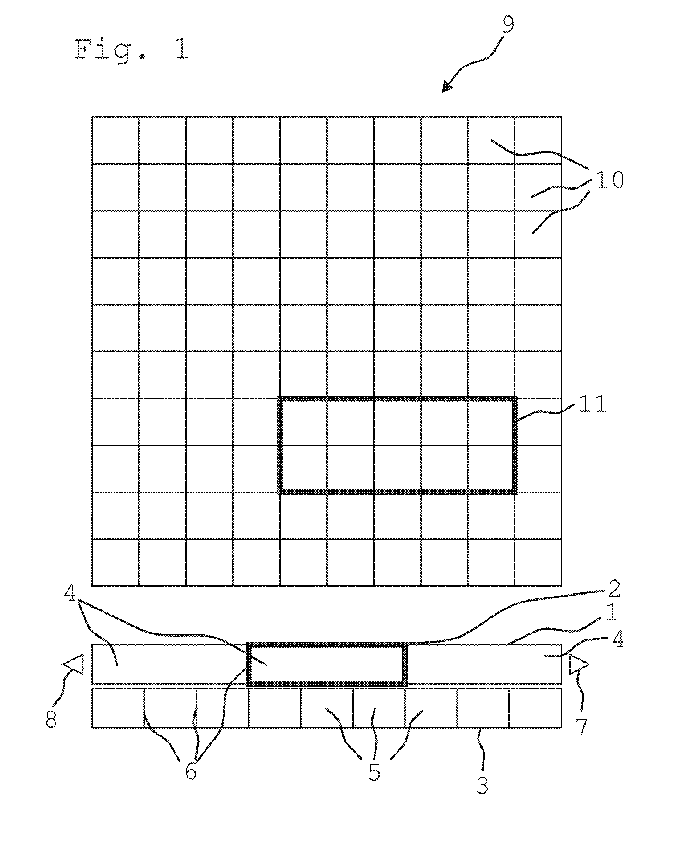

In Fig. 1 ist schematisch eine Auswahlskalenanzeige 1 mit einem ersten Auswahlelement 2 und eine Subskalenanzeige 3 dargestellt. Die Auswahlskalenanzeige weist erste Auswahldaten 4 mit drei Auswahldatenelementen auf, die jeweils ein Quartal darstellen. Die Subskalenanzeige 3 weist erste Steuerdaten 5 mit neun Steuerdatenelementen auf, die jeweils einen Monat darstellen. Die Auswahldatenelemente und die Steuerdatenelemente sind durch Teilstriche 6 grafisch voneinander getrennt. Die Auswahlskalenanzeige 1 weist zudem ein erstes Bedienungselement 7 und ein zweites Bedienungselement 8 auf, mit denen durch die auf der Auswahlskalenanzeige 1 darstellten Ausprägungen des zu Grunde liegenden Kriteriums gescrollt werden kann. Die Figur 1 zeigt zudem eine in Tabellenform elektronisch gespeicherte Datenbank 9, in der Informationen in Tabellenzellen 10 abgelegt sind.

Durch die Auswahl des von dem ersten Auswahlelement 2 umfassten Quartals wird die Informationsmenge 11 aus der elektronisch gespeicherten Datenbank 9 ausgewählt. Die Informationsmenge 11 umfasst beispielsweise alle Informationen, die in dem ausgewählten Quartal in der Datenbank 9 angelegt wurden.

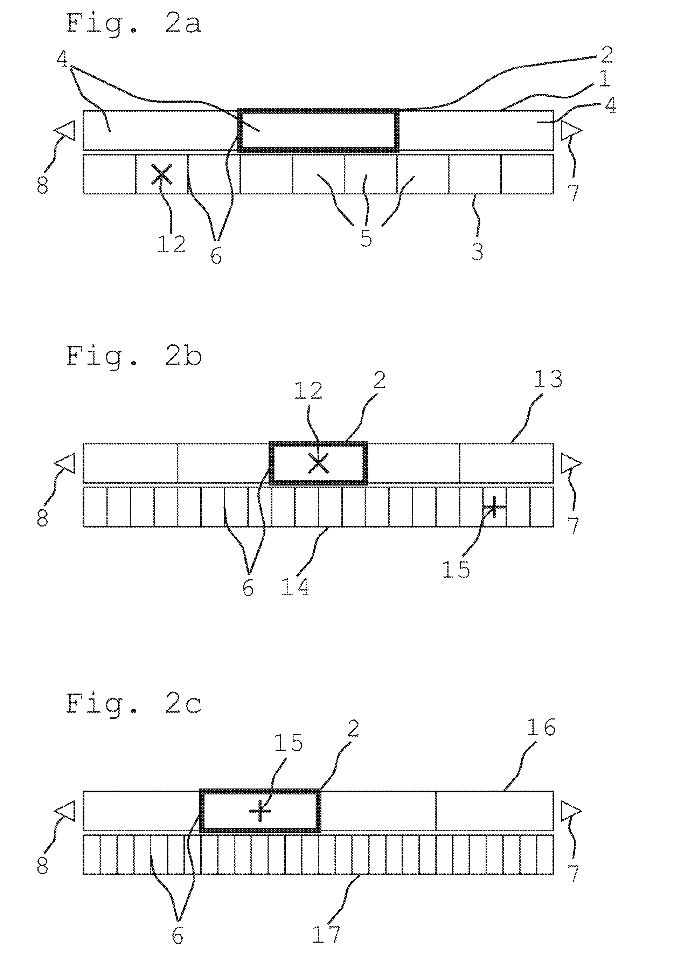

Fig. 2a zeigt eine schematische Darstellung der Auswahlskalenanzeige 1 und der Subskalenanzeige 3. Durch das Symbol 12 ist ein Steuerdatenelement gekennzeichnet, das in der ersten Ansicht mit Hilfe eines nicht dargestellten zweiten Auswahlelements ausgewählt wird.

In Fig. 2b ist die automatisch erzeugte zweite Ansicht schematisch dargestellt, die nach Auswahl des durch das Symbol 12 gekennzeichneten Steuerdatenelements in der in Fig. 2a dargestellten ersten Ansicht angezeigt wird. Die in der ersten Ansicht auf der Subskalenanzeige 3 dargestellten Monate werden in der zweiten Ansicht auf der Auswahlskalenanzeige 13 dargestellt. Der durch das Symbol 12 gekennzeichnete Monat wird in der zweiten Ansicht gemäß Fig. 2b in einem mittleren Bereich der Auswahlskalenanzeige 13 dargestellt. Auf der Subskalenanzeige 14 der zweiten Ansicht sind zudem den in der Auswahlskalenanzeige 13 dargestellten Monaten zugeordnete Kalenderwochen dargestellt. Wird nun in dieser zweiten Ansicht das durch das Symbol 15 gekennzeichnete Steuerdatenelement bzw. die durch das Symbol 15 gekennzeichnete Kalenderwoche ausgewählt, so wird automatisch die in Fig. 2c schematisch dargestellte dritte Ansicht auf dem elektronischen Anzeigegerät angezeigt.

Fig. 2c zeigt schematisch die dritte Ansicht der in den Fig. 2a und 2b dargestellten Auswahlskalenanzeige und Subskalenanzeige nach Auswahl des durch das Symbol 15 in Fig. 2b gekennzeichneten Steuerdatenelements in der in Fig. 2b dargestellten zweiten Ansicht. Auf der
Auswahlskalenanzeige 16 der dritten Ansicht sind die vier Kalenderwochen des mit der in der zweiten Ansicht ausgewählten Kalenderwoche in Bezug stehenden Monats dargestellt. Auf der Subskalenanzeige 17 der dritten Ansicht werden die zu den auf der Auswahlskalenzeige 16 angezeigten Kalenderwochen zuordnenbaren Wochentage angezeigt.

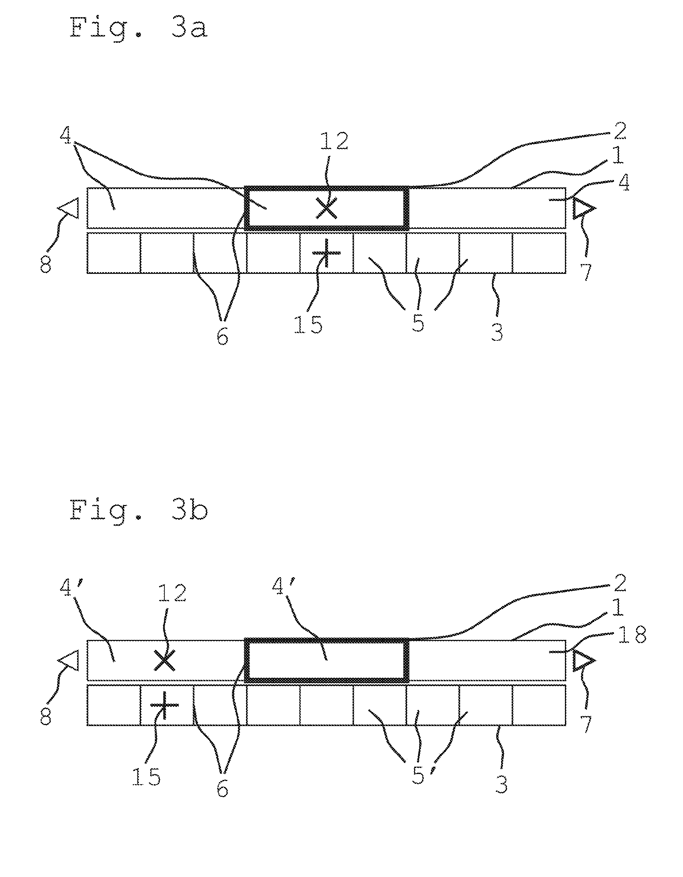

Fig. 3a zeigt eine schematische Darstellung einer Auswahlskalenanzeige 1 und einer Subskalenanzeige 3, wobei es sich bei den auf der ersten Auswahlskalenanzeige 1 angezeigten ersten Auswahldaten 4 um Jahresquartale handelt und bei den auf der Subskalenanzeige 3 angezeigten ersten Steuerdaten 5 zu den auf der Auswahlskalenanzeige 1 angezeigten Jahresquartalen zuordnenbare Monate handelt. Durch das Symbol 12 wird ein Auswahldatenelement und durch das Symbol 15 ein Steuerdatenelement gekennzeichnet. Die dicke Umrandung des Bedienungselements 7 symbolisiert, dass dieses Bedienungselement 7 in dieser Ansicht mit Hilfe eines nicht dargestellten durch ein elektronisches Eingabegerät steuerbaren Betätigungselements betätigt wird.

In Fig. 3b ist die in Fig. 3a dargestellte

Auswahlskalenanzeige 1 und die Subskalenanzeige 3 nach Betätigung des Betätigungselements 7 dargestellt. Durch die Betätigung des Betätigungselements 7 wird das durch das Symbol 12 gekennzeichnete Quartal um einen Teilstrich 6 verschoben dargestellt. Die zweiten Auswahldaten 4' beinhalten nun in dem Auswahldatenelement 18 ein in den ersten Auswahldaten nicht enthaltenes Quartal. Mit der Veränderung der Auswahlskalenanzeige 1 wurde auch die Subskalenanzeige 3 automatisch angepasst, so dass in der zweiten Ansicht auf der Subskalenanzeige 3 zweite Steuerdaten 5' angezeigt werden.

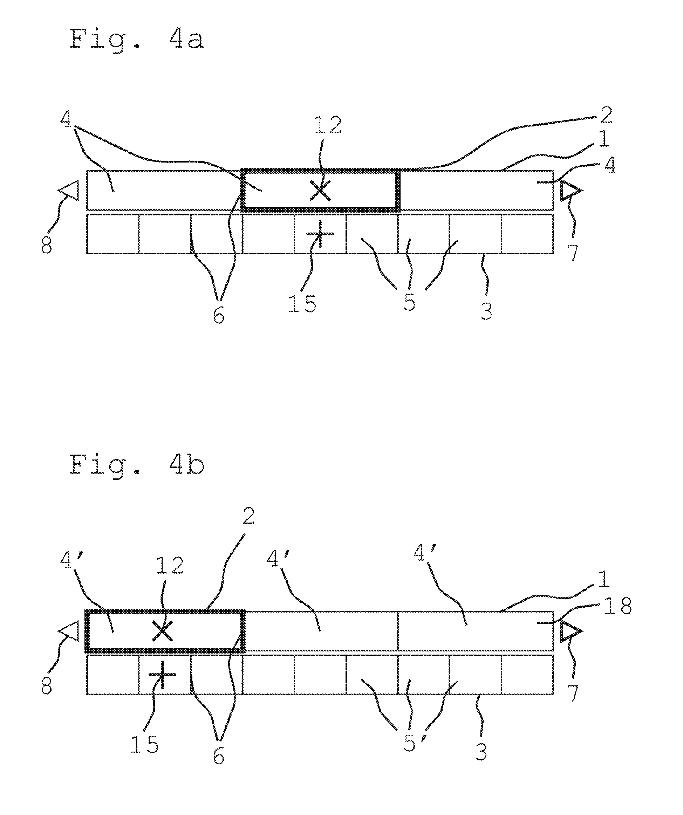

In den Fig. 4a und 4b sind analog zu den Darstellungen der Fig. 3a und 3b die Veränderung der Auswahlskalenanzeige und der Subskalenanzeige 3 bei Betätigung des
Betätigungselements 7 schematisch dargestellt. Im Unterschied zu dem in den Fig. 3a und 3b dargestellten Ausführungsbeispiel wird in dem in den Fig. 4a und 4b dargestellten Ausführungsbeispiel bei Betätigung des Betätigungselements 7 auch das erste Auswahlelement 2 mit dem durch das Auswahlelement 2 ausgewählten Auswahldatenelement mitbewegt.

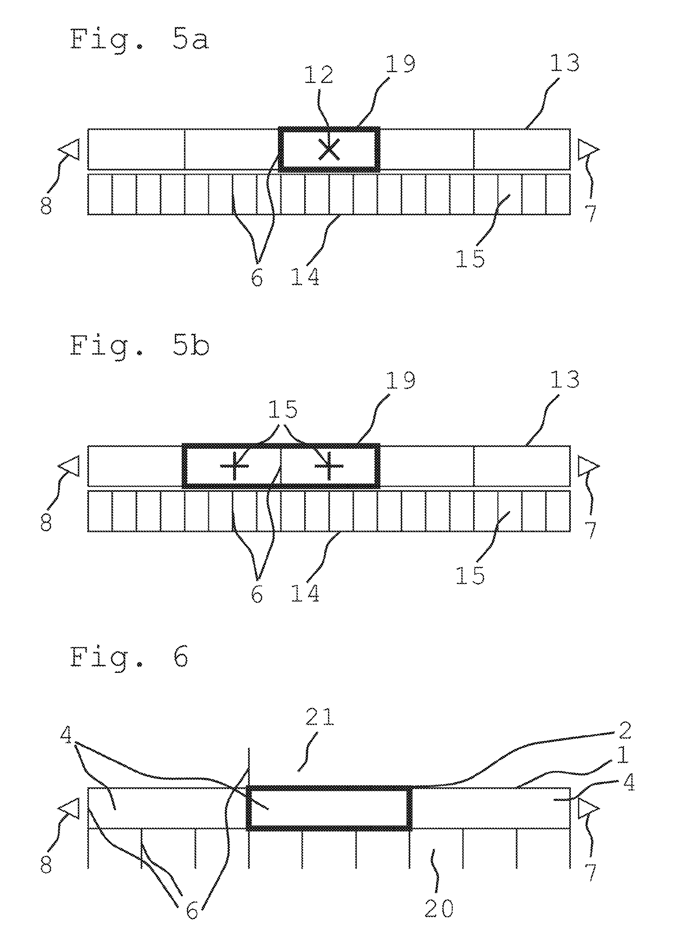

In den Fig. 5a und 5b ist schematisch eine Veränderung der Größe eines Auswahlelements dargestellt. Fig. 5a zeigt eine Auswahlskalenanzeige 13 und eine Subskalenanzeige 14 mit einem Auswahlelement 19, dass das durch das Symbol 12 gekennzeichnete Auswahldatenelement umschließt.

In Fig. 5b ist die Größe des Auswahlelements 19 mit Hilfe eines nicht dargestellten und durch ein elektronisches Eingabegerät steuerbaren Bedienelements angepasst worden, so dass das Auswahlelement 19 nun die beiden durch das Symbol 15 gekennzeichneten Auswahldatenelemente umschließt.

In Fig. 6 ist schematisch eine Auswahlskalenanzeige 1 mit einer ersten Subskalenanzeige 20 und einer auf der gegenüberliegenden Seite der Auswahlskalenanzeige 1 angeordneten zweiten Subskalenanzeige 21 dargestellt. In der Auswahlskalenanzeige 1 werden Jahresquartale zur Auswahl angeboten. Die erste Subskalenanzeige 20 beinhaltet den in der Auswahlskalenanzeige 1 angezeigten Jahresquartalen zugeordnete Monate. In der zweiten Subskalenanzeige 21 werden den in der Auswahlskalenanzeige 1 dargestellten Jahresquartalen zugeordnete Jahre dargestellt. Da nicht alle Quartale der in der zweiten Subskalenanzeige 21 dargestellten Jahre auf der Auswahlskalenanzeige 1 dargestellt sind, weist die zweite Subskalenanzeige 21 keine abschließenden Teilstriche 6 auf.

## Patentansprüche

1. Verfahren zur Auswahl einer Informationsmenge aus in mindestens einer Datenbank (9) elektronisch gespeicherten Informationen, wobei in der Informationsmenge enthaltene Informationen alle Kriterien einer Kriteriumsmenge erfüllen, so dass durch Auswahl der Kriteriumsmenge die Informationsmenge bestimmt werden kann, wobei auf einem elektronischen Anzeigegerät in einer ersten Ansicht eine Auswahlskalenanzeige (1, 13, 16) mit ersten Auswahldaten (4) eines ersten Informationstyps angezeigt wird, wobei die Kriteriumsmenge mit Hilfe eines ersten Auswahlelements (2, 19) auf der Auswahlskalenanzeige (1, 13, 16) ausgewählt werden kann, wobei eine Subskalenanzeige (3, 14, 17) mit ersten Steuerdaten (5) eines zweiten Informationstyps angezeigt wird, wobei ein Steuerdatenelement mit Hilfe eines zweiten Auswahlelements auf der Subskalenanzeige (3, 14, 17) ausgewählt werden kann, wobei bei Auswahl des Steuerdatenelements die Auswahlskalenanzeige (1, 13, 16) automatisch beeinflusst wird und wobei das erste Auswahlelement (2, 19) und das zweite Auswahlelement mit Hilfe mindestens eines elektronischen Eingabegeräts aktiviert und gesteuert werden können, **dadurch gekennzeichnet, dass** bei Auswahl des Steuerdatenelements automatisch eine zweite Ansicht anstelle der ersten Ansicht auf dem elektronischen Anzeigegerät angezeigt wird, wobei auf der Auswahlskalenanzeige (1, 13, 16) erste Auswahldaten (4) des zweiten Informationstyps angezeigt werden und auf der Subskalenanzeige (3, 14, 17) erste Steuerdaten (5) eines dritten Informationstyps angezeigt werden.

2. Verfahren gemäß Anspruch 1, **dadurch gekennzeichnet, dass** die Subskalenanzeige (3, 14, 17) unmittelbar benachbart und mit vergleichbaren Abmessungen zu der Auswahlskalenanzeige (1, 13, 16) auf dem elektronischen Anzeigegerät angezeigt wird.

3. Verfahren gemäß einem der voranstehenden Ansprüche, **dadurch gekennzeichnet, dass** eine Auswahlskaleneinteilung automatisch gemäß einer vorgegebenen, informationstypabhängigen Skaleneinteilungsregel gewählt wird und eine Subskaleneinteilung automatisch gemäß einer vorgegebenen Beziehung zwischen dem Informationstyp der ersten Auswahldaten (4) und dem Informationstyp der ersten Steuerdaten (5) gewählt wird.

4. Verfahren gemäß einem der voranstehenden Ansprüche, **dadurch gekennzeichnet, dass** das erste Auswahlelement (2, 19) an der Auswahlskalenanzeige (1, 13, 16) auf dem elektronischen Anzeigegerät angezeigt wird, wobei das erste Auswahlelement (2, 19) mit Hilfe des mindestens einen Eingabegeräts an der Auswahlskalenanzeige (1, 13, 16) verschoben werden kann und die von dem ersten Auswahlelement (2, 19) umfasste auf der Auswahlskalenanzeige (1, 13, 16) dargestellte Kriteriumsmenge ausgewählt wird.

5. Verfahren gemäß einem der voranstehenden Ansprüche, **dadurch gekennzeichnet, dass** eine Breite des ersten Auswahlelements (2, 19) angepasst werden kann, so dass eine linke Grenze und eine rechte Grenze der Kriteriumsmenge die mit dem ersten Auswahlelement (2, 19) ausgewählt werden kann angepasst wird.

6. Verfahren gemäß einem der voranstehenden Ansprüche, **dadurch gekennzeichnet, dass** bei Auswahl eines Steuerdatenelements das Steuerdatenelement als ein Auswahldatenelement automatisch an einer vorgegebenen Position auf der Auswahlskalenanzeige (1, 13, 16) in der zweiten Ansicht dargestellt wird.

7. Verfahren gemäß Anspruch 6, **dadurch gekennzeichnet, dass** das über das Steuerdatenelement ausgewählte Auswahldatenelement in einem mittleren Bereich der Auswahlskalenanzeige (1, 13, 16) dargestellt wird.

8. Verfahren gemäß einem der voranstehenden Ansprüche, **dadurch gekennzeichnet, dass** in einem vorangehenden Verfahrensschritt für jeden Informationstyp eine Ordnungsregel vorgegeben werden kann gemäß der die Daten des jeweiligen Informationstyps automatisch geordnet auf der Auswahlskalenanzeige (1, 13, 16) oder der Subskalenanzeige (3, 14, 17) angezeigt werden.

9. Verfahren gemäß einem der voranstehenden Ansprüche, **dadurch gekennzeichnet, dass** zweite Auswahldaten (4') des ersten Informationstyps anstelle der ersten Auswahldaten (4) auf der Auswahlskalenanzeige (1, 13, 16) dargestellt werden und zweite Steuerdaten (5') des zweiten Informationstyps anstelle der ersten Steuerdaten (5) auf der Subskalenanzeige (3, 14, 17) dargestellt werden oder dass zweite Auswahldaten (4') des zweiten Informationstyps anstelle der ersten Auswahldaten (4) auf der Auswahlskalenanzeige (1, 13, 16) dargestellt werden und zweite Steuerdaten (5') des dritten Informationstyps anstelle der ersten Steuerdaten (5) auf der Subskalenanzeige (3, 14, 17) dargestellt werden, wobei sich die ersten Auswahldaten (4) und die zweiten Auswahldaten (4') in mindestens einem Auswahldatenelement unterscheiden und die zweiten Steuerdaten (5') nach einer vorgegebenen Beziehungsregel zwischen dem jeweiligen Informationstyp der Auswahldaten und dem jeweiligen Informationstyp der Steuerdaten automatisch ausgewählt werden.

10. Verfahren gemäß Anspruch 9, **dadurch gekennzeichnet, dass** die zweiten Auswahldaten (4') mit Hilfe mindestens eines ersten auf dem Anzeigegerät angezeigten Bedienungselements (7, 8) ausgewählt werden.

11. Verfahren gemäß einem der voranstehenden Ansprüche, **dadurch gekennzeichnet, dass** weitere Subskalenanzeigen (3, 14, 17, 20, 21) mit weiteren Steuerdaten jeweils verschiedener Informationstypen unmittelbar benachbart zu der Auswahlskalenanzeige (1, 13, 16) auf dem elektronischen Anzeigegerät angezeigt werden.

12. Verfahren gemäß Anspruch 11, **dadurch gekennzeichnet, dass** eine erste Subskalenanzeige (20) unmittelbar benachbart zu und auf einer ersten Seite der Auswahlskalenanzeige (1, 13, 16) angezeigt wird und eine zweite Subskalenanzeige (21) unmittelbar benachbart zu und auf einer der ersten Seite gegenüberliegenden zweiten Seite der Auswahlskalenanzeige (1, 13, 16) angezeigt wird.

13. Verfahren gemäß Anspruch 12, **dadurch gekennzeichnet, dass** in der bei Auswahl eines Steuerdatenelements der ersten Subskalenanzeige (20) automatisch angezeigten zweiten Ansicht auf der Auswahlskalenanzeige (1, 13, 16) erste Auswahldaten (4) des Informationstyps des ausgewählten Steuerdatenelements angezeigt werden, wobei auf der zweiten Subskalenanzeige (21) erste Steuerdaten (5) des Informationstyps der in der ersten Ansicht dargestellten Auswahldaten angezeigt werden und in der ersten Subskalenanzeige (20) Steuerdaten eines weiteren Informationstyps angezeigt werden.

14. Computerprogrammprodukt zur Benutzung in einem Datennetz und/oder auf einer Datenverarbeitungseinheit, wobei das Computerprogrammprodukt ein oder mehrere computerlesbare Medien umfasst, die computerausführbare Anweisungen auf sich gespeichert haben, die, wenn sie durch einen Prozessor ausgeführt werden, das Datennetz und/oder die Datenverarbeitungseinheit dazu veranlassen, das Verfahren gemäß einem der Ansprüche 1 bis 13 auszuführen.
